# FASCICULE DE BREVET EUROPEEN

(11) **EP 2 724 509 B1**
(45) Date de publication et mention de la délivrance du brevet: **01.02.2017**
(21) Numéro de dépôt: 12731598.4
(22) Date de dépôt: 21.06.2012
(51) Int. Cl.: H04L 29/06, G06F 21/00

(54) **PROCÉDÉ DE DÉTECTION D'ATTAQUES ET DE PROTECTION**
VERFAHREN ZUM ERKENNUNG UND SCHUTZ GEGEN ANGRIFFE
METHOD OF DETECTION AND PROTECTION AGAINST ATTACKS

(30) Priorité: 24.06.2011 FR 1155617
(43) Date de publication de la demande: 30.04.2014
(73) Titulaire: Orange, 75015 Paris (FR)
(72) Inventeur: BIGNON, Fabien, F-14000 Caen (FR); LANIEPCE, Sylvie, F-14000 Caen (FR); MITTIG, Karel, F-14000 Caen (FR)
(86) Numéro de dépôt international: PCT/FR2012/051425
(87) Numéro de publication internationale: WO 2012/175886

(56) Documents cités:
- US-A1- 2008 235 769
- US-A1- 2011 023 114
- US-A1- 2011 078 797

## Description

L'invention concerne un procédé de détection d'attaques et de protection dans un environnement informatique virtualisé.

Elle trouve une application particulièrement intéressante dans la sécurisation des systèmes informatiques dont l'architecture est basée sur des ressources informatiques dématérialisées, mises à disposition d'un grand nombre d'utilisateurs qui y accèdent à distance et de manière évolutive. Une telle architecture est plus connue sous le nom de cloud computing, ou architecture « d'informatique dans le nuage ».

Le concept de cloud computing est apparu récemment pour désigner des architectures informatiques dans lesquelles des traitements informatiques traditionnellement localisés sur des postes clients d'utilisateurs d'une entreprise, ou sur des serveurs de l'entreprise sont déportés sur des serveurs distants. Des ressources matérielles distantes, réparties à travers le monde, sont ainsi accédées à la demande via internet pour créer des services accessibles en ligne par les utilisateurs. Les applications et les données ne se trouvent plus sur l'ordinateur local de l'utilisateur, ou sur le serveur situé dans l'entreprise de cet utilisateur, mais dans un nuage composé d'un certain nombre de serveurs distants interconnectés. Avec le cloud computing, une entreprise n'a donc plus besoin de monter elle-même son infrastructure réseau physique. Au contraire, elle peut faire appel à un fournisseur de services qui propose de telles capacités clés en main. Ce même fournisseur peut ainsi offrir une pluralité d'infrastructures dématérialisées à une pluralité de clients différents sur la base d'une même architecture physique de serveurs interconnectés.

Une architecture en cloud computing s'appuie en général sur une dématérialisation basée sur une virtualisation des ressources. La virtualisation consiste à faire fonctionner sur un seul ordinateur plusieurs systèmes d'exploitation, comme s'ils fonctionnaient sur des ordinateurs distincts. La virtualisation permet d'accroître la performance d'une infrastructure en optimisant au maximum l'utilisation des ressources de l'infrastructure. Elle génère en outre une économie importante par mutualisation des ressources et des activités.

Des architectures en cloud computing sont proposées à des clients avec des garanties de service et de disponibilité négociées par contrat et moyennant une tarification adaptée aux ressources qui sont allouées (le terme habituellement utilisé est le terme anglais « provisioning »). Afin de garantir aux clients à tout moment cette disponibilité, des systèmes permettent d'équilibrer les ressources en temps réel sur un ensemble de serveurs hôtes. Ainsi, lors d'une montée en charge d'une machine virtuelle hébergée par un serveur hôte qui, lors de cette montée en charge atteint sa limite de capacité, le système évalue la priorité de cette machine virtuelle par rapport aux autres machines virtuelles colocataires hébergées par le même serveur hôte afin de lui allouer des ressources supplémentaires. Cette allocation de ressources supplémentaires consiste à déplacer la machine virtuelle concernée vers un autre serveur hôte qui dispose des ressources suffisantes, ou à déplacer des machines virtuelles colocataires de cette machine virtuelle afin qu'elle dispose de plus de ressources, ou encore à dupliquer la machine virtuelle sur plusieurs serveurs hôtes de manière à répondre aux besoins de ressources accrus. Pour réaliser un tel déplacement de machine virtuelle, on utilise un système de migration à chaud de machines virtuelles d'un serveur hôte source vers un serveur hôte cible. Ce système est connu sous le nom de système d' « Equilibrage et de Répartition Dynamique des Ressources » (« ERDR »). La fonctionnalité ERDR permet ainsi de gérer automatiquement des demandes ponctuelles de ressources supplémentaires au sein d'une architecture en cloud afin d'assurer une continuité de la disponibilité de la machine virtuelle. Lorsqu'une machine virtuelle est migrée sur un autre serveur hôte, elle garde les mêmes caractéristiques qui permettent de l'identifier, à savoir la même adresse IP, la même adresse MAC, etc. Lorsque cette fonctionnalité est active et qu'il est observé sur une machine virtuelle au sein d'un cluster une variation à la hausse de la consommation de ressources , par exemple le processeur, la mémoire, le stockage, de telle manière que le serveur hôte qui l'héberge atteint sa limite de capacité, alors une ou plusieurs migrations de machines virtuelles peuvent être opérées vers un ou plusieurs serveurs hôtes de manière à équilibrer au mieux la répartition des charges entre les serveurs hôtes. Ainsi, la machine virtuelle concernée peut être migrée, ou des machines virtuelles colocataires de la machine virtuelle concernée peuvent être migrées. Cependant, une variation à la hausse de la consommation des ressources ou une attaque, provoquées à des fins malveillantes ne s'arrête pas du fait de migrations de machines virtuelles. Les ressources requises pour la machine virtuelle impactée continuent de croître. Les migrations de la ou des machines virtuelles peuvent alors s'enchaîner, et une fois les possibilités épuisées, le dernier serveur risque d'être indisponible, entraînant une interruption d'accès à d'autres machines virtuelles présentes sur le serveur hôte et dédiées peut-être à d'autres clients. En tout état de cause tous les serveurs sur lesquels une machine virtuelle sera passée au cours de migrations successives auront été impactés.

La demande de brevet américaine US 2011/0023114 décrit la détection d'un pattern anormal dans le trafic émis par une première machine virtuelle. Un message est envoyé à une entité de gestion. L'entité de gestion est adaptée pour initialiser une deuxième machine virtuelle, qui prendre le relais de la première machine virtuelle.

D'une manière générale, une migration de machine virtuelle n'est pas anodine. Elle a des impacts sur le réseau. En effet, toutes les informations relatives à l'état de la machine en cours de migration transitent par le réseau. Lorsque plusieurs machines virtuelles sont migrées, on comprend que ces impacts peuvent pénaliser les performances du réseau dans son ensemble. D'autre part, une migration est contraignante : le serveur hôte cible doit avoir accès au même sous-réseau que le serveur source, reposer sur le même type de « CPU » (de l'anglais « Central Processing Unit »), avoir accès au même support de stockage, etc. Ces contraintes réduisent les possibilités de migrations qui risquent d'impacter toujours les mêmes serveurs hôtes, et par la même, les machines virtuelles colocataires. Par ailleurs, une fois les possibilités de migration épuisées, le dernier serveur hôte impacté, ou les machines colocataires risquent d'être indisponibles.

Ainsi, une attaque à l'encontre d'une machine virtuelle dans une architecture en cloud computing où la fonctionnalité d'équilibrage et de répartition dynamique des ressources est active peut impacter dangereusement le serveur hôte, les machines virtuelles colocataires, voire l'ensemble de l'architecture, en provoquant des migrations non contrôlées. Cela est pénalisant dans une architecture destinée à offrir à une pluralité de clients des services réseau clés en main dont la disponibilité est garantie par contrat.

L'invention résout ce problème en proposant un procédé de détection d'attaques et de protection d'un ensemble de machines virtuelles dans un système comprenant au moins un premier serveur hôte hébergeant ledit ensemble de machines virtuelles, caractérisé en qu'il comprend les étapes de :
- réception d'un message de détection d'une attaque à l'encontre d'une machine virtuelle,
- déclenchement d'une première migration de la machine virtuelle depuis le premier serveur hôte vers un système de sécurité,
- réception d'un message de traitement de l'attaque à l'encontre de la machine virtuelle migrée.

Avec le procédé selon l'invention, une machine virtuelle sous attaque est migrée vers un environnement dédié à la sécurité, adapté pour traiter l'attaque. Sans cette migration vers un environnement dédié à la sécurité, une machine virtuelle sous attaque risquerait de faire l'objet de plusieurs migrations successives, ou de provoquer des migrations successives de machines virtuelles colocataires, sans qu'au bout du compte l'attaque ne soit traitée, ce qui pénaliserait l'ensemble de l'architecture en termes de performances et donc l'ensemble des clients. En effet, les besoins en ressource d'une machine virtuelle sous attaque ont tendance à croître. Si l'attaque n'est pas traitée, cela risque de provoquer à terme de nouvelles migrations, soit de la machine virtuelle sous attaque, soit des machines virtuelles colocataires de la machine sous attaque, ou de rendre indisponible le serveur hôte et les machines virtuelles colocataires. Le procédé de l'invention pallie les risques de migrations successives non contrôlées puisqu'en cas d'attaque, la machine migrée est traitée dans un environnement dédié à la sécurité. Une fois traitée, la machine virtuelle a des besoins qui sont a priori moindres que lorsqu'elle était sous attaque ; elle ne nécessite donc a priori pas de nouvelle migration. Cet avantage est important car les migrations sont contraignantes et ces contraintes limitent les possibilités de migration. Le serveur hôte cible doit avoir en effet accès au même sous-réseau que le serveur hôte source, reposer sur le même type de processeur, etc.

Par ailleurs, une migration de machine virtuelle a des impacts sur les performances du réseau puisque l'ensemble des informations relatives à la machine virtuelle à migrer transite par le réseau. L'impact sur les performances réseau croît de manière exponentielle avec le nombre de machines virtuelles à migrer. En limitant les migrations successives, on limite les impacts sur les performances réseau. Les performances d'une architecture cloud sont stratégiques, dans le sens où l'ensemble des clients de l'architecture sont concernés. Ces performances ont fait l'objet de contrats et de tarifs négociés avec les clients. On comprend alors qu'il n'est pas admissible qu'une attaque qui vise une machine virtuelle impacte l'ensemble des performances de l'architecture, et donc l'ensemble des clients.

Ainsi, le procédé selon l'invention évite des sur-tarifications des clients puisque le traitement des attaques évite une surconsommation des ressources du cloud.

Par ailleurs, avec le procédé de l'invention, le traitement d'une attaque par une machine de sécurité locale LSVA, hébergée par le serveur hôte qui héberge la machine virtuelle sous attaque n'est ainsi plus limité par les capacités du serveur hôte. En effet, la machine de sécurité locale LSVA utilise les ressources génériques du serveur hôte pour traiter une attaque, ce qui peut rapidement entraîner des problèmes de performances sur le serveur hôte. Ces problèmes de performance vont impacter non seulement la machine virtuelle sous attaque, et également les machines virtuelles colocataires de la machine sous attaque. Avec le procédé de l'invention, la machine virtuelle sous attaque est migrée vers le système de sécurité qui comprend des ressources ou matériels physiques dédiés à la sécurité. L'attaque est traitée dans cette environnement dédié, ce qui préserve le serveur hôte et les machines virtuelles qu'il héberge de tout impact nuisible lié à l'attaque.

Un modèle de sécurité connu préconise de migrer tout le trafic réseau à destination d'une machine cible sous attaque hébergée par un serveur hôte vers un équipement physique de sécurité dédié. Avec ce modèle, une fois le trafic analysé et filtré, le serveur hôte gère le retour du trafic sain et l'émet vers la machine cible. Cependant, un tel modèle présente l'inconvénient de voir le trafic réseau doublé : le trafic, destiné à la machine virtuelle cible est transmis à l'équipement de sécurité par le serveur hôte avant d'atteindre la machine virtuelle cible, et le serveur hôte récupère le trafic réémis par l'équipement de sécurité pour le transmettre à la machine virtuelle cible. Le procédé de l'invention ne présente pas cet inconvénient puisqu'en cas d'attaque, c'est la machine virtuelle qui est migrée, entraînant la migration de son trafic qui n'a alors pas besoin d'être dupliqué. Les gains en termes de performances pour l'architecture cloud sont considérables.

Par ailleurs, avec le procédé de l'invention on évite la duplication de la machine virtuelle sur plusieurs serveurs hôtes possible avec la fonctionnalité classique de migration à chaud. On évite ainsi la propagation de l'attaque sur plusieurs serveurs hôtes.

De façon avantageuse, le procédé comprend une étape de déclenchement d'une deuxième migration de la machine virtuelle vers le premier serveur hôte lorsque le système de sécurité a traité l'attaque.

Avec le procédé de l'invention, la machine virtuelle qui est sous attaque est isolée dans un environnement de sécurité dédié le temps de l'attaque. Une fois l'attaque traitée, et donc les risques d'impacts négatifs sur l'architecture écartés, la machine virtuelle est migrée dans son cluster d'origine. C'est la machine de sécurité qui informe le superviseur de la fin de l'attaque.

Dans un exemple de réalisation, lorsque le système comprend un groupe de serveurs hôtes, la migration est effectuée vers un deuxième serveur hôte du groupe.

Lorsque l'attaque qui visait la machine virtuelle a été traitée par le serveur de sécurité spécialisé, la migration de la machine virtuelle vers le cluster d'origine se fait vers un serveur hôte qui est le plus adapté pour accueillir la machine virtuelle. Ainsi, le serveur hôte peut être différent du serveur hôte initial que la machine virtuelle a quitté lorsqu'elle était sous attaque.

Dans un exemple de réalisation, le message de détection de l'attaque provient d'une machine virtuelle de sécurité locale, colocataire de la machine virtuelle sur le serveur hôte, ledit message étant émis consécutivement à la détection par la machine virtuelle de sécurité locale d'une attaque à l'encontre de la machine virtuelle.

La machine virtuelle de sécurité locale LSVA, colocataire de la machine virtuelle est hébergée par un serveur hôte générique. La machine de sécurité locale permet de détecter une attaque avérée et identifiée, ou un comportement anormal de la machine virtuelle. Bien que limitée dans l'exécution des fonctions de sécurité sur l'ensemble du trafic, du fait des ressources génériques dont elle dispose, elle permet d'émettre une première alerte relative au comportement de la machine virtuelle. Cette première alerte contribue au déclenchement de la migration vers un serveur de sécurité dédié. Par ailleurs, dans certains cas, la machine virtuelle de sécurité locale LSVA peut traiter l'attaque, évitant ainsi une migration vers le serveur de sécurité dédié.

Dans un exemple de réalisation, le procédé selon l'invention comprend une étape de détection que la machine virtuelle a fait l'objet d'un nombre de migrations d'un premier serveur hôte vers un deuxième serveur hôte supérieur à une valeur seuil pendant une période de temps déterminée.

Dans un autre exemple de réalisation, le procédé selon l'invention comprend une étape de détection que la machine virtuelle est à l'origine d'un nombre de migrations de machines colocataires de ladite machine virtuelle supérieur à une valeur seuil pendant une période de temps déterminée.

Avantageusement, dans ces deux exemples, la première migration est déclenchée en corrélant le message de détection avec le nombre de migrations pendant la période de temps déterminée.

Avec le procédé de l'invention, la décision de migrer une machine virtuelle depuis un serveur hôte source vers le système de sécurité OSS repose sur des informations reçues de la machine de sécurité locale LSVA qui sont corrélées à des informations liées à la vie de la machine virtuelle et relatives à l'historique des migrations de la machine virtuelle. Ainsi, si une machine virtuelle a fait l'objet d'un nombre de migrations supérieur à une valeur jugée normale pendant une période de temps donné, elle est considérée comme faisant l'objet d'une attaque et est migrée vers le serveur de sécurité dédié.

De façon avantageuse, l'attaque est traitée par une machine virtuelle de sécurité hébergée par ledit système de sécurité, ladite machine de sécurité étant spécialisée dans le traitement de ladite attaque.

Le procédé de l'invention permet d'utiliser l'outil de sécurité le plus approprié pour l'attaque qui touche la machine virtuelle migrée et ce, dans un environnement adapté au traitement des fonctions de sécurité. L'outil de sécurité peut être un outil de sécurité spécialisé comme par exemple un « WAF » (pour « Web Application Firewall »), ou un outil de sécurité générique, comme par exemple un « IDS » (pour « Intrusion Detection System »). Les chances de stopper ou d'atténuer l'attaque sont donc augmentées par rapport au traitement de cette attaque dans un environnement plus classique, c'est-à-dire non dédié à la sécurité.

L'invention concerne aussi un module de migration d'une machine virtuelle d'un ensemble de machines virtuelles hébergé par un premier serveur hôte, depuis ledit premier serveur hôte vers un serveur de sécurité d'un système de sécurité, caractérisé en qu'il comprend :
- des moyens de déclenchement d'une migration, agencés pour déclencher une migration de la machine virtuelle depuis le premier serveur hôte vers le serveur de sécurité,
- des moyens de réception, agencés pour recevoir un message de détection d'une attaque à l'encontre de la machine virtuelle, et pour recevoir un message de traitement de ladite attaque à l'encontre de la machine virtuelle migrée.

L'invention porte également sur un entité superviseur d'un réseau, ledit réseau comprenant un premier système d'au moins un premier serveur hôte hébergeant un ensemble de machines virtuelles et un système de sécurité, dit deuxième système, comprenant au moins un serveur de sécurité, ladite entité comprenant :
- des moyens de supervision agencés pour superviser lesdits premier et deuxième systèmes, ladite entité étant caractérisée en ce qu'elle comprend un module de migration selon l'invention.

L'invention concerne également un système de détection d'attaques et de protection, comprenant :
- une entité superviseur selon l'invention,
- un système de sécurité optimisé comprenant au moins un serveur de sécurité hébergeant un ensemble de machines virtuelles de sécurité.

L'invention porte aussi sur un programme sur un support de données et chargeable dans la mémoire d'un ordinateur, le programme comprenant des portions de code pour l'exécution des étapes du procédé selon l'invention, lorsque le programme est exécuté sur ledit ordinateur.

L'invention concerne aussi un support de données sur lequel est enregistré le programme d'ordinateur selon l'invention.

D'autres caractéristiques et avantages de la présente invention seront mieux compris de la description et des dessins annexés parmi lesquels :
- la figure 1 représente une architecture réseau apte à mettre en oeuvre un procédé de détection d'attaques et de protection décrit en relation avec la figure 2 ;
- la figure 2 représente les étapes du procédé de détection d'attaques et de protection selon un premier exemple de réalisation ;
- la figure 3 est un schéma d'un module de migration de machines virtuelles, selon un premier exemple de réalisation de l'invention.

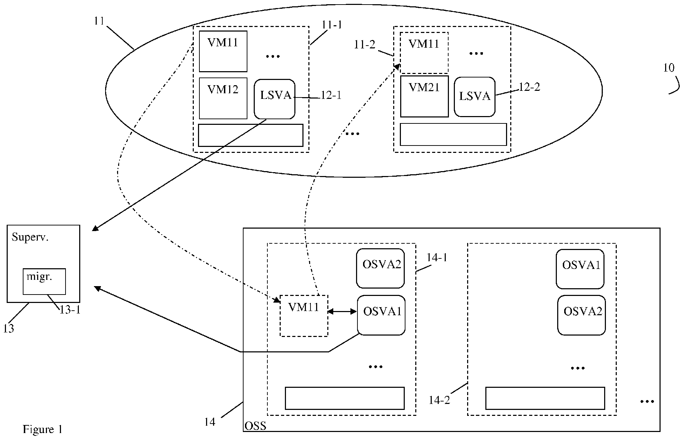

Une architecture apte à mettre en oeuvre un procédé de détection d'attaques et de protection selon l'invention va maintenant être décrite en relation avec la figure 1.

Une infrastructure réseau 10 d'informatique dans le nuage (on parle habituellement d'infrastructure en « cloud computing ») comprend au moins un ensemble 11 de ressources organisées en grappe (le terme habituellement utilisé pour désigner cet ensemble est le terme anglais « cluster »). Le cluster 11 regroupe un ensemble de serveurs hôtes 11-1, 11-2, ... Chaque serveur hôte 11-1, 11-2 du cluster 11 est adapté pour héberger une ou plusieurs machines virtuelles VM11, VM12, VM21, ... Plus précisément le cluster 11 regroupe des serveurs hôtes aptes à héberger des machines virtuelles qui concernent un même domaine fonctionnel. Chaque serveur hôte 11-1, 11-2 du cluster 11 héberge également une machine virtuelle particulière, appelée machine virtuelle de sécurité locale 12-1, 12-2 (ou « LSVA », de l'anglais «Local Security Virtual Appliance »). Une machine virtuelle de sécurité locale ou LSVA, par exemple la machine de sécurité locale 12-1 est adaptée pour détecter des attaques à l'encontre de machines virtuelles hébergées par le serveur hôte 11-1, ou un comportement anormal de ces machines. A cette fin, la machine de sécurité locale 12-1 utilise une partie des ressources du serveur hôte 11-1, au même titre que les autres machines virtuelles actives hébergées par ce serveur. La machine de sécurité locale 12-1 est adaptée pour superviser la consommation des ressources et le trafic à destination des machines virtuelles hébergées par le serveur hôte 11-1, pour analyser des champs des datagrammes IP qui circulent au niveau du serveur hôte 11-1, déduire des informations sur des attaques contre des machines virtuelles hébergées par le serveur hôte 11-1, et pour détecter des consommations anormales de ressources par des machines virtuelles. Par exemple, la machine de sécurité locale 12-1 est apte à détecter un comportement anormal d'une machine virtuelle active du serveur hôte 11-1, telle une montée en charge subite, et pour décider d'effectuer une analyse avancée de la machine virtuelle. La machine de sécurité locale 12-1 est adaptée pour mettre en oeuvre des contre-mesures lorsqu'elle a détecté une attaque sur une machine virtuelle du serveur hôte 11-1. Elle est cependant limitée, dans l'exécution de fonctions de sécurité par les ressources du serveur hôte dont elle dispose. La machine de sécurité locale 12-1 est également adaptée pour transmettre à une entité superviseur 13 de l'architecture, plus précisément à un module de migration 13-1, des informations relatives à l'attaque détectée à l'encontre d'une machine virtuelle du serveur hôte 11-1, ou au comportement anormal de cette machine. Cette transmission d'information est déclenchée par exemple lorsque la machine de sécurité locale 12-1 détecte une valeur de trafic vers une machine virtuelle supérieure à une valeur prédéfinie. Dans un deuxième exemple de réalisation, la machine de sécurité locale 12-1 détecte une signature d'attaque connue dans le trafic à destination d'une machine virtuelle. Dans un troisième exemple de réalisation, la machine de sécurité locale 12-1 détecte une consommation de ressources supérieure à une valeur déterminée. Dans un autre exemple de réalisation, la machine de sécurité locale 12-1 détecte un comportement qui s'écarte de profils comportementaux dits normaux qu'elle a préalablement mémorisés.

L'infrastructure réseau 10 selon l'invention comprend également un système de sécurité optimisé 14 (ou « OSS », pour « Optimized Security System »). Le système de sécurité 14 est un cluster particulier composé de serveurs de sécurité spécialisés 14-1, 14-2, ... dédiés à la sécurité. Un serveur de sécurité spécialisé 14-1, 14-2, comprend un matériel particulier dédié à des activités de sécurité. Par exemple, le serveur 14-1 comprend une carte réseau spécifique lui permettant de traiter une charge dix à trente fois supérieure à celle traitée par un matériel générique. Le serveur de sécurité spécialisé 14-1 est adapté pour héberger des machines virtuelles de sécurité optimisées, ou « OSVA » (de l'anglais « Optimized Security Virtual Appliance »), OSVA1 et OSVA2 sur la figure 1, qui utilisent le matériel spécifique du serveur de sécurité spécialisé 14-1 qui les héberge pour des activités exclusivement dédiées à la sécurité. Une machine virtuelle de sécurité optimisée OSVA1, OSVA2 est de type générique ou spécialisée. Plus précisément, une machine virtuelle de sécurité spécialisée est dédiée à un type d'attaque. Par exemple une machine virtuelle de sécurité spécialisée est un outil de Firewall Applicatif Web (plus connu sous l'acronyme de « WAF », de l'anglais «Web Application Firewall ») qui traite spécifiquement des requêtes http et qui est donc adapté pour le traitement d'attaques qui visent des serveurs web. Un autre exemple de machine de sécurité spécialisée est une machine adaptée pour effectuer une inspection des paquets, analyser le contenu de trames IP, au-delà de l'en-tête, afin de détecter des intrusions, ou filtrer certains paquets (on parle habituellement de « Deep Packet Inspection », ou « DPI »). Une machine virtuelle de sécurité générique est par exemple un système de détection d'intrusions au niveau réseau (le terme habituellement utilisé est le terme anglais « Network Based Intrusion Detection System », ou « NIDS »), ou un système de prévention d'intrusions (le terme habituellement utilisé est le terme anglais « IPS », pour « Intrusion Prevention System »), basés tous deux sur la détection d'attaques par reconnaissance de signatures d'attaque dans le trafic. Ainsi, le serveur de sécurité spécialisé 14-1 peut héberger une pluralité de machines virtuelles de sécurité optimisées, certaines étant de type générique et d'autres étant dédiées au traitement de certains types d'attaque. Le serveur de sécurité spécialisé 14-1 du système de sécurité optimisé 14 est également adapté pour héberger temporairement une machine virtuelle sous attaque, initialement hébergée par un serveur hôte, par exemple le serveur hôte 11-1, et pour traiter l'attaque. Plus précisément, la machine virtuelle sous-attaque, par exemple la machine virtuelle VM11, qui est migrée sur le serveur de sécurité spécialisé 14-1 par le module de migration 13-1 est associée à une machine virtuelle de sécurité optimisée apte à traiter l'attaque, par exemple la machine virtuelle de sécurité OSVA1. On dit qu'une machine virtuelle migrée est associée à une machine virtuelle de sécurité optimisée lorsque la machine virtuelle de sécurité optimisée s'occupe de la machine virtuelle. La machine virtuelle de sécurité OSVA1 est adaptée également pour informer l'entité superviseur 13 que l'attaque qui visait la machine virtuelle VM11 a été traitée. Bien que le serveur de sécurité 14 héberge temporairement des machines virtuelles qui sont actives pour des clients, celui-ci est caché des clients. En effet, aucune machine virtuelle ne peut être déployée par un client sur ce serveur. Ainsi, des risques d'introduire des failles de sécurité dans le système de sécurité 14 sont limités. Par ailleurs, les fonctions de sécurité mises en oeuvre par les machines virtuelles de sécurité OSVA sont inatteignables pour des clients malhonnêtes qui chercheraient à y trouver des failles.

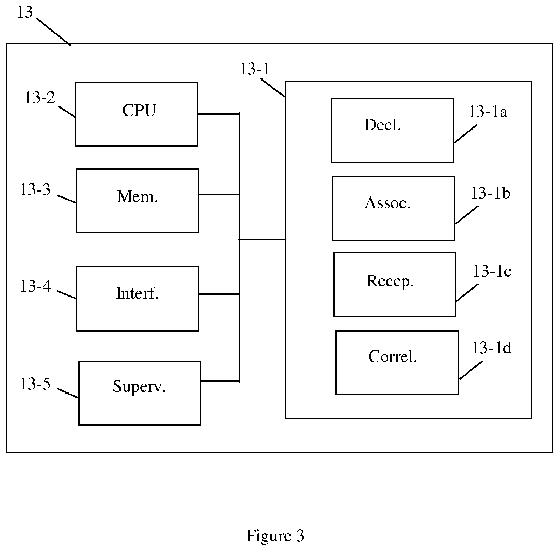

L'architecture 10 comprend également l'entité superviseur 13, matérialisée par exemple par un serveur. Le superviseur est décrit en détail en relation avec la figure 3. Le superviseur 13 est agencé pour superviser de manière globale l'architecture en cloud 10. Ainsi, le superviseur 13 est adapté pour superviser l'ensemble des clusters, le système de sécurité optimisé OSS, commander la création, l'activation et la libération de machines virtuelles sur un serveur hôte d'un cluster, consulter la charge de chacun des serveurs du cluster 10, ainsi que celle des machines virtuelles hébergées, etc. Le superviseur 13 est également adapté pour déclencher, selon l'invention, une migration d'une machine virtuelle suspectée d'être sous attaque, depuis un serveur hôte vers le système de sécurité optimisé 14. A cette fin le superviseur 13 comprend un module de migration 13-1 qui met en oeuvre une fonctionnalité d' « Equilibrage et de Répartition Dynamique des Ressources » (ou « ERDR »). La suspicion d'attaque est consécutive à la réception d'un message d'une machine de sécurité locale LSVA hébergée par un serveur hôte et informant le module de migration 13-1 de la détection d'une attaque contre une machine virtuelle, ou d'un comportement anormal de cette machine. Dans un exemple de réalisation, l'information reçue de la machine de sécurité locale LSVA peut être corrélée par le module de migration 13-1 à des informations qu'il détient, par exemple un historique des migrations relatif à la machine virtuelle, ou un historique des migrations de machines colocataires que la machine virtuelle a provoquées. Par exemple, si la machine virtuelle a été migrée un nombre de fois supérieur à une valeur déterminée pendant une période de temps donnée, alors cela permet au module de migration 13-1 de déclencher la migration. Dans un autre exemple de réalisation, si la machine virtuelle est à l'origine d'un nombre de migrations de machines colocataires supérieur à une valeur seuil donnée pendant une période de temps donnée, alors le module de migration 13-1 déclenche la migration. Le module de migration 13-1 est également adapté pour positionner une machine virtuelle dont il a déclenché la migration depuis le serveur hôte 11-1, par exemple VM11, vers le serveur de sécurité 14-1 avec une machine virtuelle de sécurité optimisée, par exemple OSVA1, de manière à ce que cette dernière traite l'attaque qui vise la machine virtuelle VM11 et s'occupe ainsi, en termes de traitement de l'attaque, de la machine virtuelle VM11. Le module de migration 13-1 est adapté pour recevoir de la machine virtuelle de sécurité optimisée OSVA1 un message l'informant que l'attaque de la machine virtuelle VM11 a été traitée. Le module de migration 13-1 est également adapté pour opérer une migration de la machine virtuelle VM11 ainsi traitée vers le cluster 10 d'origine. Cette migration correspond à un retour à un fonctionnement normal pour la machine virtuelle VM11. Lors d'une telle migration, le superviseur 13 est adapté pour choisir le serveur hôte du cluster 10 le plus adapté, en termes de capacités, pour héberger la machine virtuelle VM11 ainsi soignée.

Un seul cluster 11 est représenté sur la figure 1, l'architecture 10 peut bien sûr comporter une pluralité de clusters, chacun étant dédié à un domaine fonctionnel particulier. De même, le système de sécurité optimisé 14 n'est pas limité en nombre de serveurs de sécurité, ni en nombre de machines virtuelles de sécurité hébergées par les serveurs de sécurité.

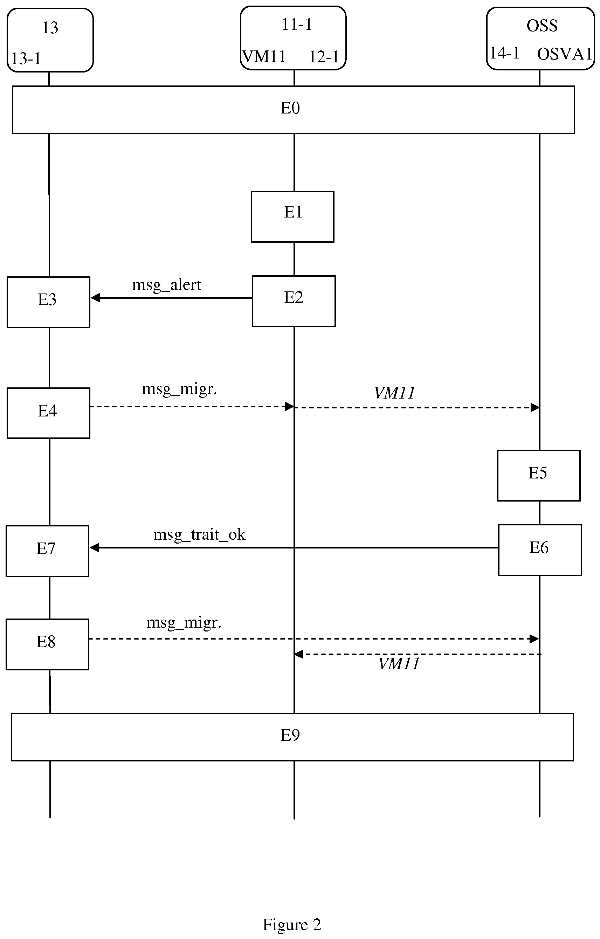

Un procédé de détection d'attaques et de protection va maintenant être décrit en relation avec la figure 2.

Dans un état initial E0 de fonctionnement normal, la machine virtuelle VM11, hébergée par le serveur hôte 11-1 a été créée par le superviseur 13, et elle est active.

Dans une étape E1 de détection, la machine de sécurité locale 12-1 détecte une attaque contre la machine virtuelle VM11. Par exemple, la machine de sécurité locale 12-1 détecte une montée en charge inhabituelle du trafic à destination de la machine virtuelle VM11, ou/et certains types de trames, ou/et certaines signatures d'attaques dans les trames IP. Cette détection s'opère par la machine de sécurité locale 12-1, par exemple au niveau du système d'exploitation du serveur hôte 11-1 qui héberge la machine virtuelle VM11. La machine de sécurité locale 12-1, en tant que machine virtuelle hébergée par le serveur hôte 11-1 partage avec d'autres machines virtuelles, en l'espèce les machines virtuelles VM11 et VM12, les ressources du serveur hôte 11-1. Dans l'exemple de réalisation décrit ici, on suppose que la machine de sécurité locale 12-1 fait une analyse sommaire de l'attaque mais n'est pas adaptée pour traiter seule l'attaque. Par exemple, la machine de sécurité locale 12-1 ne dispose pas d'assez de ressources, en termes de capacités, pour traiter l'attaque qui vise la machine virtuelle VM11. Dans un autre exemple de réalisation, elle ne dispose pas de fonctions de sécurité adaptées pour traiter l'attaque.

Dans une étape suivante E2 d'alerte, la machine de sécurité locale 12-1 envoie au module de migration 13-1 du superviseur 13 un message d'alerte l'informant que la machine virtuelle VM11 est sous attaque et que la machine de sécurité locale 12-1 n'est pas adaptée pour traiter seule cette attaque.

Dans une étape E3 de réception du message d'alerte, le module de migration 13-1 reçoit le message d'alerte envoyé au cours de l'étape précédente. Le message d'alerte identifie la machine virtuelle VM11, en fournissant ses caractéristiques réseau, en l'espèce son adresse IP, son adresse MAC, etc. Le message d'alerte comprend également des informations relatives à l'attaque en cours ou au comportement anormal détecté. Par exemple, et à titre non limitatif, les informations comprennent une signature d'attaque, un type d'attaque, une caractéristique principale de l'attaque, par exemple « attaque http », etc.

Dans une étape suivante E4 de migration, le module de migration 13-1 déclenche une migration de la machine virtuelle VM11 depuis le serveur hôte 11-1 vers le système de sécurité optimisé OSS. A cette fin, le module de migration 13-1 déclenche la fonctionnalité de migration à chaud. Ce déclenchement provoque le déplacement de la machine virtuelle VM11 depuis le serveur hôte 11-1 vers le système de sécurité optimisé OSS, plus précisément, vers un serveur de sécurité spécialisé, par exemple le serveur de sécurité 14-1. Lors de cette migration, la machine virtuelle VM11 est associée, sur le serveur de sécurité spécialisé 14-1, à une machine virtuelle de sécurité optimisée, par exemple OSVA1. Les informations transmises par la machine de sécurité locale 12-1 au module de migration 13-1 au cours de l'étape E2 d'alerte ont permis de faire le choix d'une machine virtuelle de sécurité optimisée particulière, ici OSVA1. Ainsi, dans le cas où les informations transmises par la machine locale de sécurité 12-1 au cours de l'étape E2 d'alerte indiquent que l'attaque est spécifique, par exemple qu'il s'agit d'une attaque http, alors le module de migration 13-1 associe la machine virtuelle VM11 à une machine virtuelle de sécurité de type « WAF ». Si par contre, il s'agit d'une attaque réseau, le module de migration 13-1 associe la machine virtuelle VM11 à une machine de sécurité générique, par exemple un « IDS », ou un « IPS ». On suppose ici que l'attaque est une attaque http et que la machine virtuelle de sécurité optimisée OSVA1 est spécialisée et de type WAF. On rappelle ici que la machine virtuelle de sécurité OSVA1 utilise des ressources du serveur de sécurité spécialisé 14-1, et bénéfice donc de capacités de traitement beaucoup plus importantes qu'un serveur hôte générique, tel que le serveur hôte 11-1.

Dans une étape E5 d'analyse et de protection, la machine virtuelle de sécurité optimisée OSVA1 traite l'attaque qui vise la machine virtuelle VM11 à laquelle elle est associée. On rappelle ici qu'en migrant, la machine virtuelle VM11 a gardé les caractéristiques réseaux qu'elle possédait sur le serveur hôte 11-1. Ainsi, la machine virtuelle VM11 détient toujours son adresse IP, son adresse MAC et reçoit toujours le trafic qu'elle recevait initialement. Elle est donc toujours sous attaque lorsqu'elle migre sur le serveur de sécurité 14-1 et cette attaque est alors prise en charge par la machine de sécurité optimisée OSVA1. Par exemple, dans le cas d'une attaque http, la machine virtuelle de sécurité optimisée OSVA1 de type WAF applique un ensemble de règles afin de reconnaître les attaques, de rejeter le trafic d'attaque et de laisser passer le trafic légitime. En fin d'étape E5 d'analyse et de protection, la machine virtuelle VM11 est considérée comme protégée, en ce sens que l'attaque qui la visait est considérée comme traitée par la machine de sécurité optimisée OSVA1.

Dans une étape E6 d'envoi d'information de fin d'attaque, la machine virtuelle de sécurité optimisée OSVA1 envoie au module de migration 13-1 un message d'information signalant que l'attaque qui visait la machine virtuelle VM11 a été traitée.

Dans une étape E7 de réception d'information, le superviseur 13 reçoit le message envoyé au cours de l'étape précédente.

Dans une étape E8 de migration vers le cluster, consécutive au traitement de l'attaque qui visait la machine virtuelle VM11 par la machine de sécurité OSVA1, le module de migration 13-1 déclenche une migration de la machine virtuelle VM11 vers le cluster 11. A cette fin, le superviseur 13 qui supervise l'ensemble des ressources de l'architecture et notamment du cluster 11 sélectionne un serveur hôte du cluster 11 adapté pour héberger la machine virtuelle VM11. Cette sélection consiste à identifier un serveur hôte qui dispose des capacités suffisantes pour héberger la machine virtuelle VM11. Ce serveur hôte peut être un autre serveur que celui qui hébergeait la machine virtuelle initialement.

Dans une étape E9 finale, la machine virtuelle VM11 a été migrée vers le serveur hôte 11-2 et elle est active.

Le procédé a été décrit pour une machine virtuelle sous attaque. Bien sûr, plusieurs machines virtuelles peuvent être simultanément sous attaque et plusieurs migrations peuvent être opérées simultanément.

Un superviseur 13 selon l'invention va maintenant être décrit en relation avec la figure 3.

Le superviseur 13 est un serveur informatique qui comprend de manière classique :
- un microprocesseur 13-2, ou "CPU" (de l'anglais "Central Processing Unit"), destiné à charger des instructions en mémoire, à les exécuter, à effectuer des opérations ;
- un ensemble de mémoires, dont une mémoire volatile 13-3, ou "RAM" (pour "Random Access Memory") utilisée pour exécuter des instructions de code, stocker des variables, etc. ;
- des interfaces de communication 13-4, adaptées pour communiquer avec les serveurs hôtes, les machines virtuelles, le système de sécurité optimisé, etc., qui constituent l'architecture cloud 10 ;
- un module de supervision 13-5 adapté pour superviser l'ensemble de l'architecture cloud 10. En particulier, le module de supervision 13-5 connaît à tout moment la charge de chacune des machines virtuelles actives hébergées par les serveurs hôtes de l'architecture ;
- un module de migration 13-1 selon l'invention, adapté pour gérer les migrations d'une machine virtuelle depuis un serveur hôte du cluster 11 vers le système de sécurité optimisé OSS d'une part, et d'autre part les migrations depuis le système de sécurité optimisé OSS vers un cluster. Le module de migration 13-1 met en oeuvre la fonctionnalité de migration à chaud et il comprend :
   - des moyens de déclenchement 13-la, agencés pour déclencher une migration d'une machine virtuelle depuis un serveur hôte du cluster 11 vers le système de sécurité optimisé OSS, ou depuis le système de sécurité optimisé vers un serveur hôte du cluster. Les moyens de déclenchement 13-1a utilisent à cette fin les informations reçues d'une machine de sécurité locale LSVA colocataire de la machine virtuelle sur le serveur hôte et les informations reçues de la machine virtuelle de sécurité optimisée OSVA. Dans un exemple de réalisation de l'invention, les moyens de déclenchement 13-la utilisent des informations obtenues de moyens de corrélation 13-1d ;
   - des moyens d'association 13-1b, agencés pour sélectionner une machine de sécurité optimisée OSVA du système de sécurité optimisé OSS, adaptée pour traiter une attaque à l'encontre d'une machine virtuelle à migrer d'un serveur hôte vers le système de sécurité. Les moyens d'association 13-1b sont adaptés pour choisir une machine de sécurité spécialisée ou générique. Ce choix dépend des informations reçues, préalablement à la migration, de la machine virtuelle de sécurité locale LSVA colocataire de la machine virtuelle qui fait l'objet d'une migration. Ces informations sont relatives au comportement de la machine virtuelle et concernent par exemple une attaque avérée et identifiée, ou un comportement anormal qui nécessiterait pour la machine de sécurité locale LSVA des ressources pour investiguer dont elle ne dispose pas sur le serveur hôte ;
   - des moyens de réception 13-1c, agencés pour recevoir d'une machine virtuelle de sécurité locale LSVA un message comprenant des informations relatives à une machine virtuelle hébergée par un serveur hôte du cluster 11. Ainsi, les moyens de réception 13-1c sont adaptés pour recevoir d'une machine de sécurité locale LSVA des informations sur une attaque en cours sur la machine virtuelle, ou sur un comportement anormal de la machine virtuelle. Ils sont également adaptés pour recevoir d'une machine virtuelle de sécurité optimisée OSVA des informations sur la fin d'une attaque.
   - dans un exemple de réalisation de l'invention, le module de migration 13-1 comprend également des moyens de corrélation 13-1d, agencés pour corréler aux informations reçues de la machine de sécurité locale LSVA des informations supplémentaires relatives à la machine virtuelle. Par exemple, ces informations concernent l'historique des migrations subies par la machine virtuelle concernée. Dans un autre exemple de réalisation, ces informations concernent le nombre de migrations dont est à l'origine la machine virtuelle. Ces migrations peuvent concerner des machines colocataires de la machine virtuelle.

Dans un autre exemple de réalisation, le module de migration 13-1 est indépendant du superviseur 13. Le module de migration 13-1 comprend alors des moyens de communication (non représentés) avec le superviseur 13. Dans ce mode de réalisation on peut envisager d'avoir plusieurs modules de migration pour une architecture cloud, un module de migration pouvant être dédié à chacun des clusters. Dans l'exemple de réalisation où il est intégré au superviseur 13, les moyens de réception 13-1c coopèrent avec les interfaces de communication 13-4 du superviseur 13.

Les interfaces de communication 13-4, le module de supervision 13-5, le module de migration 13-1 et les moyens qui le composent sont de préférence des modules logiciels comprenant des instructions logicielles pour faire exécuter les étapes du procédé de détection d'attaques et de protection précédemment décrit.

L'invention concerne donc aussi :
- un programme d'ordinateur comportant des instructions pour la mise en oeuvre du procédé de détection d'attaques et de protection tel que décrit précédemment, lorsque ce programme est exécuté par un processeur du dispositif superviseur ;
- un support d'enregistrement lisible sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal ou un réseau de télécommunication.

L'invention concerne également un système de détection d'attaques et de protection comprenant un dispositif superviseur 13 et un système de sécurité optimisé OSS comprenant au moins un serveur de sécurité optimisé, adapté pour mettre en oeuvre une opération de migration d'une machine virtuelle, pour traiter l'attaque, et pour migrer la machine virtuelle une fois traitée vers son cluster d'origine.

## Revendications

1. Procédé de détection d'attaques et de protection d'un ensemble de machines virtuelles dans un système (11) comprenant au moins un premier serveur hôte (11-1) hébergeant ledit ensemble de machines virtuelles, caractérisé en qu'il comprend les étapes de :
- réception (E2) d'un message de détection d'une attaque à l'encontre d'une machine virtuelle (VM11),
- déclenchement (E4) d'une première migration de la machine virtuelle depuis le premier serveur hôte vers un système de sécurité (OSS),
- réception (E6) d'un message de traitement de l'attaque signalant que l'attaque détectée à l'encontre de la machine virtuelle migrée a été traitée.

2. Procédé de détection d'attaques et de protection selon la revendication 1, comprenant une étape de :
- déclenchement (E8) d'une deuxième migration de la machine virtuelle vers le premier serveur hôte lorsque le système de sécurité a traité l'attaque.

3. Procédé de détection d'attaques et de protection selon la revendication 2, dans lequel le système comprenant un groupe de serveurs hôtes (11-1, 11-2), la migration est effectuée vers un deuxième serveur hôte du groupe.

4. Procédé de détection d'attaques et de protection selon la revendication 1, dans lequel le message de détection de l'attaque provient d'une machine virtuelle de sécurité locale (LSVA), colocataire de la machine virtuelle sur le serveur hôte, ledit message étant émis consécutivement à la détection par la machine virtuelle de sécurité locale d'une attaque à l'encontre de la machine virtuelle.

5. Procédé de détection d'attaques et de protection selon la revendication 1, comprenant une étape de détection que la machine virtuelle a fait l'objet d'un nombre de migrations d'un premier serveur hôte vers un deuxième serveur hôte supérieur à une valeur seuil pendant une période de temps déterminée.

6. Procédé de détection d'attaques et de protection selon la revendication 1, comprenant une étape de détection que la machine virtuelle est à l'origine d'un nombre de migrations de machines colocataires de ladite machine virtuelle supérieur à une valeur seuil pendant une période de temps déterminée.

7. Procédé de détection d'attaques et de protection selon la revendication 5 ou la revendication 6, dans lequel la première migration est déclenchée en corrélant le message de détection avec le nombre de migrations pendant la période de temps déterminée.

8. Procédé de détection d'attaques et de protection selon la revendication 1, dans lequel l'attaque est traitée par une machine virtuelle de sécurité hébergée par ledit système de sécurité, ladite machine de sécurité étant spécialisée dans le traitement de ladite attaque.

9. Module de migration (13-1) d'une machine virtuelle (VM11) d'un ensemble de machines virtuelles hébergé par un premier serveur hôte, depuis ledit premier serveur hôte vers un serveur de sécurité (14-1) d'un système de sécurité (OSS), caractérisé en qu'il comprend :
- des moyens (13-la) de déclenchement d'une migration, agencés pour déclencher une migration de la machine virtuelle depuis le premier serveur hôte vers le serveur de sécurité (OSS),
- des moyens de réception (13-1c), agencés pour recevoir un message de détection d'une attaque à l'encontre de la machine virtuelle, et pour recevoir un message de traitement de ladite attaque à l'encontre de la machine virtuelle migrée.

10. Entité superviseur (13) d'un réseau, ledit réseau comprenant un premier système (11) d'au moins un premier serveur hôte (11-1) hébergeant un ensemble de machines virtuelles et un système de sécurité (OSS), dit deuxième système, comprenant au moins un serveur de sécurité (14-1), ladite entité comprenant :
- des moyens de supervision (13-5) agencés pour superviser lesdits premier et deuxième systèmes,
ladite entité étant **caractérisée en ce qu'**elle comprend un module de migration selon la revendication 9.

11. Système de détection d'attaques et de protection, comprenant :
- une entité superviseur selon la revendication 10,
- un système de sécurité optimisé (OSS) comprenant au moins un serveur de sécurité (14-1) hébergeant un ensemble de machines virtuelles de sécurité (OSVA).

12. Programme sur un support de données et chargeable dans la mémoire d'un ordinateur, le programme comprenant des portions de code pour l'exécution des étapes du procédé selon l'une des revendications 1 à 8, lorsque le programme est exécuté sur ledit ordinateur.

13. Support de données sur lequel est enregistré le programme d'ordinateur selon la revendication 12.

## Patentansprüche

1. Verfahren zur Erkennung von Angriffen und zum Schutz von einer Gesamtheit von virtuellen Maschinen in einem System (11), umfassend mindestens einen ersten Host-Server (11-1), der die Gesamtheit von virtuellen Maschinen beherbergt, **dadurch gekennzeichnet, dass** es die folgenden Schritte aufweist:
- Empfangen (E2) von einer Nachricht der Erkennung von einem Angriff auf eine virtuelle Maschine (VM11),
- Auslösen (E4) einer ersten Migration der virtuellen Maschine von dem ersten Host-Server zu einem Sicherheitssystem (OSS),
- Empfangen (E6) von einer Nachricht der Verarbeitung des Angriffs, die signalisiert, dass der erkannte Angriff auf die migrierte virtuelle Maschine verarbeitet worden ist.

2. Verfahren zur Erkennung von Angriffen und zum Schutz nach Anspruch 1, umfassend einen Schritt des:
- Auslösens (E8) einer zweiten Migration der virtuellen Maschine zu dem ersten Host-Server, wenn das Sicherheitssystem den Angriff verarbeitet hat.

3. Verfahren zur Erkennung von Angriffen und zum Schutz nach Anspruch 2, wobei das System eine Gruppe von Host-Servern (11-1, 11-2) aufweist, die Migration zu einem zweiten Host-Server der Gruppe durchgeführt wird.

4. Verfahren zur Erkennung von Angriffen und zum Schutz nach Anspruch 1, wobei die Nachricht der Erkennung des Angriffs von einer lokalen virtuellen Sicherheitsmaschine (LSVA) stammt, die Mitmieter der virtuellen Maschine auf dem Host-Server ist, wobei die Nachricht nach der Erkennung durch die lokale virtuelle Sicherheitsmaschine eines Angriffs auf die virtuelle Maschine gesendet wird.

5. Verfahren zur Erkennung von Angriffen und zum Schutz nach Anspruch 1, umfassend einen Schritt des Erkennens, dass die virtuelle Maschine Gegenstand von einer Anzahl von Migrationen von einem ersten Host-Server zu einem zweiten Host-Server gewesen ist, die höher als ein Schwellenwert während eines festgelegten Zeitraums ist.

6. Verfahren zur Erkennung von Angriffen und zum Schutz nach Anspruch 1, umfassend einen Schritt des Erkennens, dass die virtuelle Maschine die Ursache für eine Anzahl von Migrationen von Maschinen ist, die Mitmieter der virtuellen Maschine sind, die höher als ein Schwellenwert während eines festgelegten Zeitraums ist.

7. Verfahren zur Erkennung von Angriffen und zum Schutz nach Anspruch 5 oder 6, wobei die erste Migration durch Korrelieren der Nachricht der Erkennung mit der Anzahl von Migrationen während des festgelegten Zeitraums ausgelöst wird.

8. Verfahren zur Erkennung von Angriffen und zum Schutz nach Anspruch 1, wobei der Angriff von einer virtuellen Sicherheitsmaschine, die von dem Sicherheitssystem beherbergt wird, verarbeitet wird, wobei die Sicherheitsmaschine auf die Verarbeitung des Angriffs spezialisiert ist.

9. Modul zur Migration (13-1) von einer virtuellen Maschine (VM11) von einer Gesamtheit von virtuellen Maschinen, die von einem ersten Host-Server beherbergt wird, von dem ersten Host-Server zu einem Sicherheitsserver (14-1) eines Sicherheitssystems (OSS), **dadurch gekennzeichnet, dass** es Folgendes aufweist:
- Mittel (13-1a) zum Auslösen einer Migration, die eingerichtet sind, um eine Migration der virtuellen Maschine von dem ersten Host-Server zu dem Sicherheitsserver (OSS) auszulösen,
- Mittel zum Empfangen (13-1c), die eingerichtet sind, um eine Nachricht der Erkennung von einem Angriff auf die virtuelle Maschine zu empfangen und um eine Nachricht der Verarbeitung des Angriffs auf die migrierte virtuelle Maschine zu empfangen.

10. Netzwerk-Überwachungseinheit (13), wobei das Netzwerk ein erstes System (11) von mindestens einem ersten Host-Server (11-1), der eine Gesamtheit von virtuellen Maschinen beherbergt, und ein Sicherheitssystem (OSS), das sogenannte zweite System, das mindestens einen Sicherheitsserver (14-1) aufweist, aufweist, wobei die Einheit Folgendes aufweist:
- Überwachungsmittel (13-5), die eingerichtet sind, um das erste und zweite System zu überwachen,
wobei die Einheit **dadurch gekennzeichnet ist, dass** sie ein Modul zur Migration nach Anspruch 9 aufweist.

11. System zur Erkennung von Angriffen und zum Schutz, umfassend:
- eine Überwachungseinheit nach Anspruch 10,
- ein optimiertes Sicherheitssystem (OSS), das mindestens einen Sicherheitsserver (14-1) aufweist, der eine Gesamtheit von virtuellen Sicherheitsmaschinen (OSVA) beherbergt.

12. Programm auf einem Datenträger und das in den Speicher eines Computers geladen werden kann, wobei das Programm Codeabschnitte zum Ausführen der Schritte des Verfahrens nach einem der Ansprüche 1 bis 8 aufweist, wenn das Programm auf dem Computer ausgeführt wird.

13. Datenträger, auf dem das Computerprogramm nach Anspruch 12 aufgezeichnet ist.

## Claims

1. Method of attack detection and protection of a set of virtual machines in a system (11) comprising at least one first host server (11-1) hosting said set of virtual machines, **characterized in that** it comprises the steps of :
- receiving (E2) an attack detection message regarding a virtual machine (VM11),
- triggering (E4) a first migration of the virtual machine from the first host server toward a security system (OSS),
- receiving (E6) an attack treatment message signaling that the attack detected against the migrated virtual machine has been treated.

2. Method of attack detection and protection according to Claim 1, comprising a step of:
- triggering (E8) a second migration of the virtual machine toward the first host server when the security system has treated the attack.

3. Method of attack detection and protection according to Claim 2, in which, the system comprising a group of host servers (11-1, 11-2), the migration is effected toward a second host server of the group.

4. Method of attack detection and protection according to Claim 1, in which the attack detection message originates from a local security virtual machine (LSVA), co-tenant of the virtual machine on the host server, said message being transmitted following the detection by the local security virtual machine of an attack against the virtual machine.

5. Method of attack detection and protection according to Claim 1, comprising a step of detecting that the virtual machine has been subject to a number of migrations from a first host server toward a second host server greater than a threshold value during a set time period.

6. Method of attack detection and protection according to Claim 1, comprising a step of detecting that the virtual machine is at the origin of a number of migrations of co-tenant machines of said virtual machine greater than a threshold value during a set time period.

7. Method of attack detection and protection according to Claim 5 or Claim 6, in which the first migration is triggered by correlating the detection message with the number of migrations during the set time period.

8. Method of attack detection and protection according to Claim 1, in which the attack is treated by a virtual security machine hosted by said security system, said security machine being specialized in the treatment of said attack.

9. Module (13-1) for migrating a virtual machine (VM11) of a set of virtual machines hosted by a first host server, from said first host server toward a security server (14-1) of a security system (OSS), **characterized in that** it comprises:
- means (13-1a) for triggering a migration, arranged for triggering a migration of the virtual machine from the first host server toward the security server (OSS),
- reception means (13-1c), arranged for receiving an attack detection message regarding the virtual machine, and for receiving an attack treatment message regarding the migrated virtual machine.

10. Supervisor entity (13) of a network, said network comprising a first system (11) of at least one first host server (11-1) hosting a set of virtual machines and a security system (OSS), said second system comprising at least one security server (14-1), said entity comprising :
- supervision means (13-5) arranged to supervise said first and second systems,
- said entity being **characterized in that** it comprises a migration module according to Claim 9.

11. Attack detection and protection system:
- a supervisor entity according to Claim 10,
- an optimized security system (OSS) comprising at least one security server (14-1) hosting a set of virtual security machines (OSVA).

12. Program on a data medium that can be loaded into a computer memory, the program comprising portions of code for executing the steps of the method according to one of Claims 1 to 8, when the program is executed on said computer.

13. Data medium on which is recorded the computer program according to Claim 12.
